(19) Europäisches Patentamt
European Patent Office
Office européen des brevets

(11) EP 2 657 286 B1

(12) EUROPEAN PATENT SPECIFICATION

(45) Date of publication and mention of the grant of the patent:
**14.05.2014 Bulletin 2014/20**

(51) Int Cl.:
***C08L 23/12*** *(2006.01)*

(21) Application number: **12165431.3**

(22) Date of filing: **25.04.2012**

# (54) Process for preparing polypropylene with high content of beta modification

Verfahren zur Herstellung von Polypropylen mit hohem Betamodifikations-Gehalt

Procédé de préparation de polypropylène à haute teneur de modification bêta

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.10.2013 Bulletin 2013/44**

(73) Proprietor: **Borealis AG**
**1220 Vienna (AT)**

(72) Inventors:
- **Kandioller, Gottfried**
  **4020 Linz (AT)**
- **Tranchida, Davide**
  **4020 Linz (AT)**
- **Parkinson, Matthew**
  **4020 Linz (AT)**
- **Resconi, Luigi**
  **44100 Ferrara (IT)**
- **Gloger, Dietrich**
  **4020 Linz (AT)**
- **Sandholzer, Martina**
  **4030 Linz (AT)**

(74) Representative: **Maiwald Patentanwalts GmbH**
**Elisenhof**
**Elisenstrasse 3**
**80335 München (DE)**

(56) References cited:
**WO-A1-2007/116034 WO-A1-2010/057841**
**WO-A2-03/094832**

- **BUSSE ET AL.: J. MACROMOLECULES, vol. 33, 2000, pages 8775-8780, XP002681659,**
- **KRACHE ET AL.: MACROMOLECUES, vol. 40, 2007, pages 6871-6878, XP002681660,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 657 286 B1

## Description

The present invention is directed to a process for controlling beta-phase formation in a metallocene-based isotactic propylene homopolymer, as well as to a process for producing a mold or cast product containing beta-phase.

WO 03/094832A relates to to a highly active beta-nucleating additive for polypropylene and to a process using it. Particularly, it is concerned with a process for the preparation of a polypropylene mixture having an increased content of beta-crystalline polypropylene, in which a polypropylene mixture of nanoscale iron oxide and polypropylene is melted at a temperature of at least 150°C and subsequently cooled in such a way that the cooled polypropylene melt has an increased content of beta-crystalline polypropylene.

WO 2010/57841 relates to beta-nucleated propylene 1-butene copolymer with low amounts of xylene solubles for making pipes, in particular for pressure pipes.

Beta-phase formation in melt crystallized, metallocene-based isotactic polyplropylyene (MC-iPP) has not been reported in the literature so far. Only when nucleating agents are added, beta-form formation can be observed for these polymers. Busse et al (J. Macromolecules 2000, 33, 8775-8780) describe the formation of beta-phase in MC-iPP (defect concentration as determined by $^{13}C$-NMR: 1.1%) only upon the addition of the nucleating agent N,N-dicyclohexyl-2,6-naphthalene dicarboxamide (0.3 wt%). In the absence of the nucleating agent, no beta-phase was observed. Krache et al (Macromolecues 2007, 40, 6871-6878) describe the competition between alpa- , beta- and gamma-polymorphs in beta-nucleated MC-iPP. They found that the addition of 1 wt% of a typical beta-nucleating agent was not enough to develop any appreciable amount of beta-modification whereas in comparison, the same amount of nucleating agent added to a Ziegler-Natta iPP (ZN-iPP) leads to almost 100% of beta-form. However, ZN catalysts have the disadvantage that polar residues like chlorine, aluminium, titanium, magnesium or silicon originating from the used Ziegler-Natta catalyst, are found in the resulting polymer. Such residues can have negative impact on the desired products, for instance molded products. In contrast thereto, with a metallocene catalyst a polypropylene is obtainable being essentially free of undesired residues.

It is therefore the object of the present invention to provide a process for controlling beta-phase formation in an isotactic propylene homopolymer, more preferably in a metallocenebased isotactic propylene homopolymer. Moreover, it is an object of the present invention to provide a mold or cast product containing beta-phase.

The present invention is based on the finding that a propylene homopolymer with β-phase is obtained by using a propylene homopolymer with rather low stereo and/ or region defects and applying to said propylene homopolymer heat and pressure. A further finding is that the beta-phase formation can be controlled by varying the chosen melting/cooling conditions.

Thus the present invention is directed to a process for producing a molded isotactic propylene homopolymer with beta-phase, the process comprising the steps of

(a) heating an isotactic propylene homopolymer powder with a melt flow rate $MFR_2$ (230 °C) measured according to ISO 1133 of equal or higher to 1.0 g/10 min and being free of nucleally agent to a temperature equal or above the melting temperature ($T_m$) measured by differential scanning calorimetry (DSC) of said powder, and holding the temperature for at least 1 minute; and
(c) cooling the molded propylene homopolymer down to ambient temperature.

In a preferred aspect the present invention is directed to a such process for producing a molded isotactic propylene homopolymer with beta-phase, the process comprising the steps of,

(a) heating an isotactic propylene homopolymer powder with a melt flow rate $MFR_2$ (230 °C) measured according to ISO 1133 of equal or higher to 1.0 g/10min to a temperature equal or above the melting temperature ($T_m$) measured by differential scanning calorimetry (DSC) of said powder, and holding the temperature for at least 1 minute; applying simultaneously pressure in the range of 1 to 140 MPa;
(b) optionally holding the pressure of step (a) without further heating; and
(c) cooling the compression molded propylene homopolymer down to ambient temperature.

Thereby, the term "polymer powder" or "powder" are equally applied in the instant invention and define preferably the polymer directly derived from polymerization, i.e. the "polymer as is", without being further processed.

The terms "moulding" or "moulded" according to this invention is broadly understood and thus cover articles obtained by any kind of forming processes via moulding comprising the process steps as indicated above and optionally further defined in more detail below. The terms "moulding" or "moulded" in particular covers for example injection moulded, compression moulded or extruded articles. Combinations of these forming processes like extrusion blow moulding, injection blow moulding, injection stretch blow moulding are covered as well. In the compression moulding process the moulding material is placed in a mould cavity and heated up to a temperature above the melting temperature (Tm). The

mould cavity is closed and a top force pressure of more than the atmospheric pressure is applied. Afterwards the material is cooled down, optionally the pressure is holded during the cooling phase. In the injection moulded process the moulding material is fed into a heated barrel (where it is heated up and moulded) and forced into a mould cavity where it cools down under pressure. In the extrusion process the material is heated up and moulded in the extruder and pushed through a die. Reference with regard to the definitions of extrusion and moulding is made to the "Polypropylene Handbook", Nello Pasquini, 2nd Edition, Hanser.

According the instant invention a molded isotactic propylene homopolymer has been molten either with or without pressure. In turn a compression molded isotactic propylene homopolymer has been molten under pressure, i.e. a pressure being higher than the atmospheric pressure.

Throughout the present invention a preferred isotactic propylene homopolymer is the metallocene-based isotactic propylene homopolymer. Thus in a preferred embodiment throughout the present invention the term "isotactic propylene homopolymer" can be replaced by the term "metallocene-based isotactic propylene homopolymer".

It is preferred to stabilize the isotactic propylene homopolymer powder with standard stabilizers as known in the art, like primary and secondary antioxidants.

The process of present invention is applied to an isotactic propylene homopolymer powder with a melt flow rate $MFR_2$ (230 °C) measured according to ISO 1133 of equal or higher to 1.0 g/10min. Preferably the isotactic propylene homopolymer has a melt flow rate $MFR_2$ (230 °C) in the range from 1.0 g/10min to 50 g/10min, particularly from 1.0 g/10min to 10.0 g/10min, from 1.0 g/10min to 8.0 g/10min or from 1.0 g/10min to 7.0 g/10min. Preferred lower limits are 1.0 g/10min, 1.5 g/10min or 2.0 g/10min.

The term "equal or above the melting temperature ($T_m$) measured by differential scanning calorimetry (DSC) of the isotactic propylene homopolymer powder" in step (a) means a temperature at least as high as the temperature $T_m$ as measured by differential scanning calorimetry (DSC) of the isotactic propylene homopolymer to be processed, preferably it means a temperature range from $T_m$ to 80°C above the temperature $T_m$, more preferably it means a temperature range from $T_m$ to 65°C above the temperature $T_m$, like a temperature range from $T_m$ to 50°C above the temperature $T_m$.

Alternatively, the term "equal or above the melting temperature ($T_m$) measured by differential scanning calorimetry (DSC) of the isotactic propylene homopolymer powder" can be given as temperature range from $T_m$ to 260°C, more preferably from $T_m$ to 240°C, still more preferably from $T_m$ to 230°C, yet more preferably from $T_m$ to 220°C.

Alternatively, the term "equal or above the melting temperature ($T_m$) measured by differential scanning, calorimetry (DSC) of the isotactic propylene homopolymer powder" can be given in absolute terms, i.e. a range from 170°C to 260°C, preferably from 180°C to 240°C, more preferably from 180°C to 230°C, like from 185°C to 220°C.

In a preferred embodiment the isotactic propylene homopolymer powder is not only exposed a certain temperature but also a certain pressure. Accordingly it is preferred that throughout step (a) a specific pressure is applied. Thus in some embodiments, the lower pressure given for step (a) may be 1 MPa, 3 MPa, 5 MPa, 8 MPa, or 10 MPa. The upper pressure may be given as 140 MPa, 120 MPa. 110 MPa, 100 MPa, 90 MPa, or 80 MPa. It is to be understood that the upper and lower limits as given herein may be combined with each other. Moreover, it is preferred that during pressing, the pressure is kept constant. In one preferred embodiment the pressure is between 2 to 100 MPa, more preferably between 3 to 80 MPa, yet more preferably between 5 to 20 MPa, like between 5 to 15 MPa.

The temperature and optionally the pressure applied in step (a) shall be hold for a certain time. Preferably, the temperature and optionally the pressure should be hold for at least 1 minute, as for example 1 to 15 minutes. In some embodiments, the lower limit of the time is 1 min, 2 min, 3 min, or 4 min. In some embodiments, the upper limit of the time is 15 min, 13 min, 10 min, 7 min.

Accordingly in step (a), the temperature and optionally the pressure is preferably upheld for at least 1 minute, as for example 1 to 15 minutes. In some embodiments, the lower limit of the time is 1 min, 2 min, 3 min, or 4 min. In some embodiments, the upper limit of the time is 15 min, 13 min, 10 min, 7 min. It is to be understood that each lower limit may be combined with any one of the upper limits. Thus in one preferred embodiment the pressure is preferably upheld for 2 to 7 minutes.

In the optional step (b) pressure is applied on the isotactic propylene homopolymer preferably without further heating. Preferably the pressure values and ranges, respectively, described for step (a) are equally applicable for step (b). More preferably in step (b) the pressure of step (a) is kept without further heating. More preferably the pressure of step (b) differs not more than 1 MPa, preferably not more than 0.5 MPa, like not more than 0.05 MPa from the pressure applied in step (a). In one specific embodiment the pressure in step (a) and (b) are identical, i.e. no difference in pressure is detectable.

In one embodiment, the pressure in step (b) is upheld for 1 to 15 minutes. In some embodiments, the lower limit of the time is 1 min, 2 min, 3 min, or 4 min. In some embodiments, the upper limit of the time is 15 min, 13 min, 10 min, 7 min. In one embodiment, the product of step (a) is transferred for step (b) to another press held at ambient temperature, thereby applying the pressure of step (a) and holding the pressure upheld for 1 to 15 minutes, like 2 to 10 min. Accordingly in some embodiments, the lower limit of the time is 1 min, 2 min, 3 min, or 4 min. In some embodiments,

the upper limit of the time is 15 min, 13 min, 10 min, 7 min.

It is to be understood that each lower limit may be combined with any one of the upper limits. Thus in one preferred embodiment the pressure in step (b) is preferably upheld for 2 to 7 minutes.

The term "ambient temperature" in the meaning of present invention is the ambient air temperature, i.e. between 15 and 30°C.

In step (c), the product obtained in step (a) or (b) is allowed to cool down to ambient temperature.

In step (c) it is not mandatory to choose a specific cooling rate. However, specific cooling rates may be applied, such as a cooling rate selected in a range from 100 to 0.1 °C/min, more preferably in the range of 20 to 1 °C/min.

As processing of polymers involves the re-melting and crystallization of an already solidified polymer ("pellets"), it is important that melting and cooling of the product obtained in the process above does not impair the β-phase content in the (compression) molded isotactic propylene homopolymer treated by further melting/crystallization. In order to secure a beta-phase content in a further processed (compression) moulded isotactic propylene homopolymer the following conditions have to be met.

As processing of polymers involves the re-melting and crystallization of an already (compression) moulded isotactic propylene homopolymer it is important that melting and cooling of the product obtained in the process above does not impair the β-phase content in the (compression) moulded isotactic propylene homopolymer treated by further melting/crystallization. In order to secure a β-phase content in a further (compression) moulded isotactic propylene homopolymer, the following conditions have to be met.

Therefore, in one embodiment of the invention, the process as described above, including steps (a), and (c) and optional step (b) may be expanded with the following steps:

(d) heating the (compression) molded product obtained after step (c) to a temperature equal or above the melting temperature ($T_m$) measured by differential scanning calorimetry (DSC) of the propylene homopolymer;
(e) optionally forming a molded product;
(f) cooling the product of step (d) or (e) at a cooling rate in a range from 100°C/min to 0.1 °C/min.

In a step (d), the obtained product of step (c) is subjected to a melting process. Thereby, the (compression) moulded isotactic propylene homopolymer is heated to a temperature above the the melting temperature ($T_m$) measured by differential scanning calorimetry (DSC) of the isotactic propylene homopolymer. It is preferred that the temperature is not too high so that the thermal history of the polymer is not completely destroyed. Therefore, it is preferred that the temperature applied is not higher than 300°C, preferably not higher than 250°C, more preferably not higher than 210°C. Accordingly it is appreciated that the temperature is in the range of 180 to 300 °C, more preferably in the range of 190 to 250 °C, like in the range of 195 to 210 °C.

Particularly, the term "equal or above the melting temperature ($T_m$) measured by differential scanning calorimetry (DSC) of the isotactic propylene homopolymer" in step (d) means a temperature as least as high as the temperature $T_m$ as measured by differential scanning calorimetry (DSC), preferably it means a temperature range from $T_m$ to 80°C above the temperature $T_m$, more preferably it means a temperature range from $T_m$ to 70°C above the temperature $T_m$., more preferably it means a temperature range from $T_m$ to 60°C above the temperature $T_m$.

Also, it is preferred that the temperature is not applied too long. Preferred time limits are 1 to 15 min. The lower limit of the application time may be selected from 1 min, 2 min, 3 min, 5 min, or 7 min. The upper limit of the application time may be selected from 15 min, 13 min, or 10 min. It is to be understood that each lower limit given can be combined with each upper limit given. Accordingly in one embodiment the temperature is applied for 5 to 15 min.

In an optional step (e), the molded isotactic propylene homopolymer obtained in step (d) can be formed to a moulded product.

The application of step (f) is again important for retaining and/or obtaining beta-phase. Therefore, in step (f) a cooling rate in a range from 100°C/min to 0.1 °C/min is applied. Preferred ranges of cooling rates are 100°C/min to 0.1 °C/min, 50°C/min to 0.1 °C/min, 30°C/min to 0.1 °C/min, 20°C/min to 0.1 °C/min, 15°C/min to 0.1 °C/min, 30°C/min to 0.5 °C/min, 20°C/min to 0.5 °C/min, 15°C/min to 0.5 °C/min, 10°C/min to 0.5 °C/min, 20°C/min to 1 °C/min, 15°C/min to 1 °C/min, 10°C/min to 1 °C/min. Particularly preferred cooling rates are 0.1 °C/min, 0.2 °C/min, 0.3 °C/min, 0.4 °C/min, 0.5 °C/min, 0.8 °C/min, 1 °C/min, 1.5 °C/min, 2 °C/min, 3 °C/min, 4 °C/min, 5 °C/min, 6 °C/min, 7 °C/min, 8 °C/min, 9 °C/min, 10 °C/min, 15 °C/min, 20 °C/min, 25 °C/min, 30 °C/min, or 35 °C/min.

Further, present invention relates to a (compression) moulded isotactic propylene homopolymer obtainable by any one of the processes described above, in particular after step (c) or (f), comprising 5 to 90 %, like 10 to 90 %, of beta-phase, wherein said beta-phase is measured on a DSC specimen via wide angle X-ray scattering (WAXS). More preferably it is appreciated that the (compression) moulded isotactic propylene homopolymer obtained by the instant process, in particular after step (c) or (f), has a β-phase of equal or more than 5 %, preferably equal or more than 10 %, more preferably equal or more than 12 %, wherein said β-phase has been measured via wide angle x-ray scattering (WAXS). The upper limit of beta-phase content is preferably equal or less than 90 %, equal or less than 80 % or equal

or less than 70 %. It is to be understood that each combination of the given lower and upper limits are to be regarded as disclosed, for instance a range of beta-phase from 5 to 90 %, 10 to 90 %, 12 to 80 % or 12 to 70 %. The beta-content may be measured in the skin and/or in the core of the sample. Preferably, the beta-phase content is measured in the core, i.e. in the middle, of the sample.

The final beta-phase content in the (compression) molded isotactic propylene homopolymer obtained by the inventive process is the combination of melting, optional pressure, and recrystallization at a specific speed. It has surprisingly been found that the lower the cooling rate in steps (c), and particularly in step (f), the higher the content of beta-phase in the (compression) molded isotactic propylene homopolymer. Therefore, the content of beta-phase can be controlled via application of a specific selected cooling rate.

Moreover, it appears that the higher the melting temperature Tm of the isotactic propylene homopolymer the higher the content of the beta-phase. Again, this allows for the control of beta-phase content.

The inventive process does not use any nucleating agents for triggering the beta-phase. In other words, the isotactic propylene homopolymer used in present inventive process is free of nucleating agents, especially free of beta-nucleating agents.

The process according to present invention is useful for such applications where a beta-phase in isotactic propylene homopolymer is desired. Particularly, such properties are desired for specific moulded products.

Accordingly the present invention is also directed to (compression) moulded products comprising at least 90.0 wt% of the (compression) moulded isotactic propylene homopolymer as defined above. In further embodiments of the invention, the (compression) moulded product comprises at least 95.0 wt%, at least 97.0 wt% or at least 99.0 wt% of the (compression) moulded isotactic propylene homopolymer as described herein. In a further embodiment of the invention, the (compression) moulded product comprises 100 wt%, at the most 99.9 wt%, at the most 99.7 wt%, at the most 99.5 wt% or 99.2 wt% of the (compression) moulded isotactic propylene homopolymer as described herein. It is to be understood that each combination of lower and upper limits as given above is regarded as disclosed, for example that the (compression) moulded product according to the invention comprises the (compression) moulded isotactic propylene homopolymer as described herein in the range of 90.0 wt% to 100.0 wt%, or for example in the range of 90.0 wt% to 99.7 wt%. In one embodiment the (compression) moulded isotactic propylene homopolymer is the only polymer within the moulded product. In still another preferred embodiment the (compression) moulded product consists of the (compression) moulded isotactic propylene homopolymer as described herein.

In the following, the isotactic propylene homopolymer suitable for the present inventive process is further described in more detail.

The expression homopolymer used in the instant invention relates to a polypropylene that consists substantially, i.e. of at least 99.5 wt.%, more preferably of at least 99.8 wt.-%, of propylene units. In a preferred embodiment only propylene units in the propylene homopolymer are detectable.

Preferably the isotactic propylene homopolymer can be defined by its melting temperature ($T_m$). Thus it is appreciated that the propylene homopolymer has a melting temperature ($T_m$) measured by differential scanning calorimetry (DSC) of at least 140.0 °C, more preferably of at least 145 °C. The upper limit of the melting temperature ($T_m$) may be given as 175°C, 173°C, 171 °C or 170°C. Thus it is in particular appreciated that the melting temperature ($T_m$) measured by differential scanning calorimetry (DSC) of the propylene homopolymer is in the range of 140 to 175 °C, more preferably in the range of 145 to 175 °C, yet more preferably in the range of 145 to 169 °C, like in the range of 153 to 169 °C.

There exists a crucial difference in the chain-microstructure between polypropylenes produced by a metallocene catalyst and a Ziegler-Natta catalyst. The chain regularity of metallocene based polypropylene is disturbed by stereo and regio-defects, whereas the chain regularity of Ziegler-Natta based polypropylenes is only disturbed by stereo defects. It is important to note that present isotatcic polypropylene homopolymer is preferably a metallocene-based isotactic propylene homopolymer.

The isotactic propylene homopolymer, like the metallocene-based isotactic propylene homopolymer, can be defined by its stereoregularity, i.e. by its pentad isotacticity. Thus it is preferred that the isotactic propylene homopolymer, like the metallocene-based isotactic propylene homopolymer, has a rather high pentad isotacticity (mmmm), i.e. equal or more than 98.0 mol.-%, more preferably equal or more than 98.5 mol.-%, still more preferably equal or more than 99.0 mol.-%, yet more preferably in the range of equal or more than 98.5 to below 100.0 mol.-%, like equal or more than 98.9 to equal or below 99.8 mol.-%, like equal or more than 99.0 to equal or below 99.8 mol.-%.

On the other hand the content of mrrm stereo sequences shall preferably be rather low. Accordingly it is preferred that the mrrm stereo-defects of the isotactic propylene homopolymer, like the metallocene-based isotactic propylene homopolymer, are preferably below 1.0 mol.-%, more preferably equal or below 0.8 mol.-%, yet more preferably equal or below 0.5 mol.-%, still more preferably in the range of equal or more than 0.0 to equal or below 1.0 mol.-%, yet more preferably in the range of equal or more than 0.0 to equal or below 0.5 mol.-%.

In one embodiment the isotactic propylene homopolymer, like the metallocene-based isotactic propylene homopolymer, contains a detectable amount of region-defects, i.e. 2,1 erythro regio-defects. Accordingly the isotactic

propylene homopolymer, like the metallocene-based isotactic propylene homopolymer, has preferably 2,1 erythro regio-defects of equal or more than 0.1 to equal or below 1.2 mol.-% as determined by $^{13}C$ NMR spectroscopy. Preferably the isotactic propylene homopolymer, like the metallocene-based isotactic propylene homopolymer, is featured by a rather low concentration of regio-errors, like <2,1> erythro regio-defects, compared to known metallocene based polypropylenes. Accordingly it is preferred that the propylene homopolymer of the instant, like the metallocene-based isotactic propylene homopolymer invention, has <2,1> erythro regio-defects of equal or more than 0.1 to equal or below 1.2 ml.-%, more preferably of equal or more than 0.1 to equal or below 0.9 mol.-%, like equal or more than 0.10 to equal or below 0.80 mol.-% or like equal or more than 0.10 to equal or below 0.70 mol.-%, determined by $^{13}C$-spectroscopy.

Commercially available polypropylenes in principle useful for capacitors are featured by rather high xylene cold soluble (XCS) content. The isotactic propylene homopolymer of the instant invention is featured by rather low xylene cold soluble (XCS) content, i.e. by a xylene cold soluble (XCS) content of equal or below 1.5 wt.-%, more preferably of equal or below 1.0 wt.-%, yet more preferably equal or below 0.8 wt.-%, like equal or below 0.5 wt.-%. Thus it is in particular appreciated that the isotactic propylene homopolymer of the instant invention has a xylene cold soluble (XCS) content in the range of 0.0 to equal or below 1.5 wt.-%, more preferably in the range of 0.0 to equal or below 1.0 wt.-%, yet more preferably in the range of 0.0 to equal or below 0.8 wt.-%, like in the range of 0.0 to equal or below 0.5 wt.-%.

As from the word "isotactic propylene homopolymer" or "metallocene-based isotactic propylene homopolymer" apparent the present invention does not define a composition of different polymers. Accordingly the isotactic propylene homopolymer, like the metallocene-based isotactic propylene homopolymer, may comprise further additives but no other polymer components than the homopolymer. It is especially preferred that the isotactic propylene homopolymer, like the metallocene-based isotactic propylene homopolymer, is free of nucleating agents, in particular free of β-nucleating agents and/or α-nucleating agents.

As mentioned above the propylene homopolymer usable for present inventive process is preferably produced by a metallocene catalyst. Accordingly in the following the preparation of the isotactic propylene homopolymer usable for present inventive process is described in more detail.

The catalyst used for the polymerisation of the isotactic propylene homopolymer according to the invention is a metallocene. In principle, the invention is not limited to specific metallocenes. In the following, preferred metallocenes are described.

Hence, the isotactic propylene homopolymer of this invention is preferably produced in the presence of a single-site catalyst, in particular in the presence of a metallocene catalyst, like a metallocene catalyst of formula (I).

Accordingly, the isotactic propylene homopolymer usable for the present inventive process is preferably produced by polymerizing propylene in the presence of a solid catalyst system, said solid catalyst system comprises

(i) a complex of formula (I)

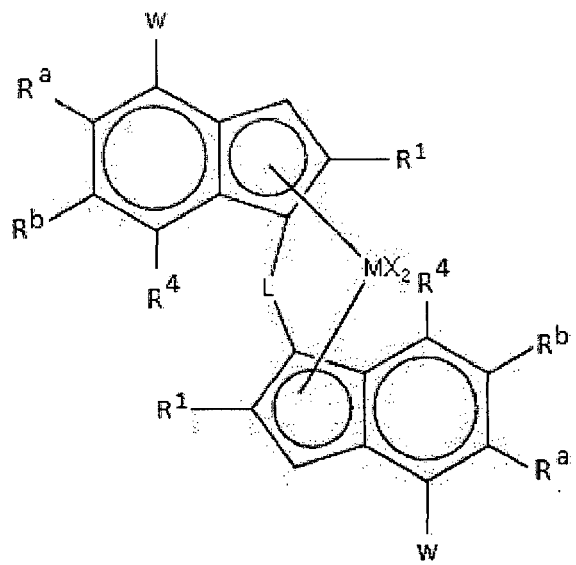

(I)

wherein

M is zirconium or hafnium;
each X is a sigma ligand;

L is a divalent bridge selected from $-R'_2C-$, $-R'_2C-CR'_2-$, $-R'_2Si-$, $-R'_2Si-SiR'_2-$,$-R'_2Ge-$, wherein each R' is independently a hydrogen atom, $C_1$-$C_{20}$-hydrocarbyl, tri($C_1$-$C_{20}$-alkyl)silyl, $C_6$-$C_{20}$-aryl, $C_7$-$C_{20}$-arylalkyl or $C_7$-$C_{10}$-alkylaryl;
each $R^1$ is independently a $C_1$-$C_{20}$ hydrocarbyl radical optionally containing one or more heteroatoms from groups 14-16, or is a $C_4$-$C_{20}$ hydrocarbyl radical branched at the β-atom to the cyclopentadienyl ring, optionally containing one or more heteroatoms belonging to groups 14-16, or is a $C_3$-$C_{20}$ hydrocarbyl radical branched at the β-atom to the cyclopentadienyl ring where the β-atom is an Si-atom;
each $R^a$ is independently hydrogen or an aliphatic $C_1$-$C_{20}$ hydrocarbyl group optionally containing one or more heteroatoms from groups 14-16;
each $R^b$ is independently hydrogen or an aliphatic $C_1$-$C_{20}$ hydrocarbyl group optionally containing one or more heteroatoms from groups 14-16; or
an $R^a$ and $R^b$ group on adjacent carbon atoms can be taken together to form a 5 membered saturated carbon ring which is optionally substituted by n groups $R^{18}$, n being from 0 to 3;
each $R^{18}$ is same or different and may be a $C_1$-$C_{20}$ hydrocarbyl group, or a $C_1$-$C_{20}$ hydrocarbyl radical optionally containing one or more heteroatoms belonging to groups 14-16;
each $R^4$ is independently an aliphatic $C_{1\text{-}20}$ hydrocarbyl group optionally containing one or more heteroatoms from groups 14-16 with at least 2 non-H atoms, or is a hydrogen atom or a $C_{1\text{-}6}$-hydrocarbyl radical;
each W group is independently an aryl or heteroaryl group having up to 20 carbon atoms optionally substituted by one or more groups $R^5$;
each $R^5$ is the same or different and is a $C_1$-$C_{20}$ hydrocarbyl group optionally containing one or more heteroatoms belonging to groups 14-16; or two $R^5$ groups on adjacent carbon atoms taken together can form a fused 5 or 6 membered non aromatic ring with the W group, said ring being itself optionally substituted with one or more $C_1$-$C_{20}$ hydrocarbyl group(s), or two adjacent $R^5$ groups taken together can form a further mono or multicyclic ring condensed to W optionally substituted by one or two groups $R^5$;
and

(ii) optionally a cocatalyst comprising a compound of a group 13 metal, e.g. boron.

The term $C_1$-$C_{20}$ hydrocarbyl group therefore includes $C_1$-$C_{20}$ alkyl, $C_2$-$C_{20}$alkenyl, $C_2$-$C_{20}$ alkynyl, $C_3$-$C_{20}$ cycloalkyl, $C_3$-$C_{20}$ cycloalkenyl, $C_6$-$C_{20}$ aryl groups, $C_7$-$C_{20}$ alkylaryl groups or $C_7$-$C_{20}$ arylalkyl groups or of course mixtures of these groups such as cycloalkyl substituted by alkyl.

Unless otherwise stated, preferred $C_1$-$C_{20}$ hydrocarbyl groups are $C_1$-$C_{20}$ alkyl, $C_4$-$C_{20}$ cycloalkyl, $C_5$-$C_{20}$ cycloalkyl-alkyl groups, $C_7$-$C_{20}$ alkylaryl groups, $C_7$-$C_{20}$ arylalkyl groups or $C_6$-$C_{20}$ aryl groups, especially $C_1$-$C_{10}$ alkyl groups, $C_6$-$C_{10}$ aryl groups, or $C_7$-$C_{12}$arylalkyl groups, e.g. $C_1$-$C_8$ alkyl groups. Most especially preferred hydrocarbyl groups are methyl, ethyl, propyl, isopropyl, tertbutyl, isobutyl, $C_5$-$C_6$ cycloalkyl, cyclohexylmethyl, phenyl or benzyl.

The term halo includes fluoro, chloro, bromo and iodo groups, especially chloro groups, when relating to the complex definition.

The term heterocyclic group means a preferably monocyclic non aromatic ring structure comprising at least one heteroatom, e.g. piperidinyl or piperazinyl.

The term heteroaryl means a preferably monocyclic aromatic ring structure comprising at least one heteroatom. Preferred heteroaryl groups have 1 to 4 heteroatoms selected from O, S and N. Preferred heteroaryl groups include furanyl, thiophenyl, oxazole, thiazole, isothiazole, isooxazole, triazole and pyridyl.

Any group including "one or more heteroatoms belonging to groups 14-16" preferably means O, S or N. N groups may present as -NH- or -NR"- where R" is $C_1$-$C_{10}$ alkyl. There may, for example, be 1 to 4 heteroatoms.

The phrase "an aliphatic C1-20 hydrocarbyl group optionallycontaining one or more heteroatoms from groups 14-16 with at least 2 non-H atoms" excludes methyl, but includes methoxy.

The oxidation state of the metal ion is governed primarily by the nature of the metal ion in question and the stability of the individual oxidation states of each metal ion.

It will be appreciated that in the complexes of the invention, the metal ion M is coordinated by ligands X so as to satisfy the valency of the metal ion and to fill its available coordination sites. The nature of these σ-ligands can vary greatly.

A preferred subgroup of the metallocenes belong to the group of formula (I),

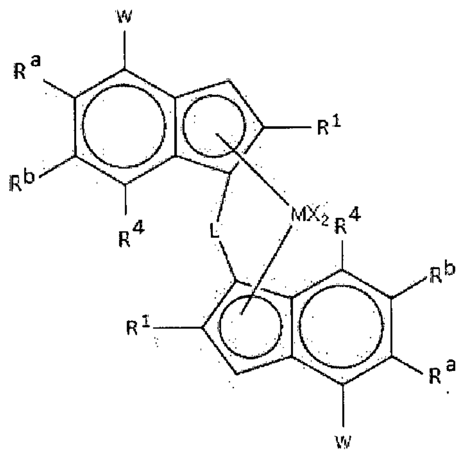

wherein

M is zirconium or hafnium;
each X is a sigma ligand;
L is a divalent bridge selected from $-R'_2C-$, $-R'_2C-CR'_2-$, $-R'_2Si-$, $-R'_2Si-SiR'_2-$, $-R'_2Ge-$, wherein each R' is independently a hydrogen atom, $C_1$-$C_{20}$-hydrocarbyl, tri($C_1$-$C_{20}$-alkyl)silyl, $C_6$-$C_{20}$-aryl, $C_7$-$C_{20}$-arylalkyl or $C_7$-$C_{20}$-alkylaryl;
each $R^1$ is independently a $C_1$-$C_{20}$ hydrocarbyl radical optionally containing one or more heteroatoms from groups 14-16;
each $R^a$ is independently hydrogen or an aliphatic $C_1$-$C_{20}$ hydrocarbyl group optionally containing one or more heteroatoms from groups 14-16;
each $R^b$ is independently hydrogen or an aliphatic $C_1$-$C_{20}$ hydrocarbyl group optionally containing one or more heteroatoms from groups 14-16; or
an $R^a$ and $R^b$ group on adjacent carbon atoms can be taken together to form a 5 membered saturated carbon ring which is optionally substituted by a group $R^{18}$;
each $R^{18}$ is a $C_1$-$C_{20}$ hydrocarbyl group;
each $R^4$ is independently an aliphatic $C_{1}$-$_{20}$ hydrocarbyl group optionally containing one or more heteroatoms from groups 14-16, or is a hydrogen atom;
each W group is independently an aryl or heteroaryl group having up to 20 carbon atoms optionally substituted by one or more groups $R^5$;
each $R^5$ is a $C_1$-$C_{20}$ hydrocarbyl group, or two $R^5$ groups on adjacent carbon atoms taken together can form a fused 5 or 6 membered non aromatic ring with the W group, said ring being itself optionally substituted with one or more $C_1$-$C_{20}$ hydrocarbyl group(s).

The cocatalyst comprises a compound of a group 13 metal, e.g. boron.
Examples for the catalysts of formula I are:

MC1: *rac*-dimethylsilanediylbis[2-methyl-4-(3,5-di-tert-butylphenyl)-7-methoxyindenyl] zirconium dichloride
and
MC2: rac-methyl(cyclohexyl)silanediyl bis(2-methyl-4-(4-tert-butylphenyl)indenyl) zirconium dichloride.

The catalyst described herein can be used in non-supported form or in solid form, it may be used as a homogeneous catalyst or heterogeneous catalyst.
The catalyst preferably is in solid form, preferably in solid particulate form can be either supported on an external carrier material, like silica or alumina, or, in a particularly preferred embodiment, is free from an external carrier, however still being in solid form. Ideally, the solid catalyst is obtainable by a process in which

(a) a liquid/liquid emulsion system is formed, said liquid/liquid emulsion system comprising a solution of the catalyst components (i) and (ii) dispersed in a solvent so as to form dispersed droplets; and
(b) solid particles are formed by solidifying said dispersed droplets.

By free from an external carrier is meant that the catalyst does not contain an external support, such as an inorganic support, for example, silica or alumina, or an organic polymeric support material.

The two multicyclic ligands making up the complex of formula (I) are preferably identical and hence the complex of formula (I) may be symmetrical. The complexes of the invention may be in their meso or racemic forms (or a mixture thereof). Preferably, the racemic (rac) form is used.

To form an active catalytic species it is normally necessary to employ a cocatalyst as is well known in the art. Cocatalysts comprising an organometallic compound of Group 13 metal, like organoaluminium compounds used to activate metallocene catalysts are suitable for use in this invention.

The instant solid catalyst system comprises (i) a complex in which the metal ion is coordinated by a ligand as defined herein; and normally (ii) an aluminium alkyl compound (or other appropriate cocatalyst), or the reaction product thereof. Thus the cocatalyst is preferably an alumoxane, like MAO or an alumoxane other than MAO.

Alternatively, however, the catalysts of the invention may be used with other cocatalysts, e.g. boron compounds such as $B(C_6F_5)_3$, $C_6H_5N(CH_3)_2H:B(C_6F_5)_4$, $(C_6F_5)_3C:B(C_6F_5)_4$ or $Ni(CN)_4[B(C_6F_5)_3]_4^{2-}$.

The use of aluminoxanes, especially MAO, is highly preferred.

Suitable amounts of cocatalyst will be well known to the skilled man. Typically Al to M molar ratios are from 1:1 to 1000:1 mol/mol. Preferably when an aluminium alkyl is used as a coctalyst, the molar ratio of the aluminium in the activator to the transition metal in the complex is from 1 to 500 mol/mol, preferably from 10 to 400 mol/mol and in particular from 50 to 400 mol/mol.

The catalyst system used is in solid particulate form, but unsupported, i.e. being free of support material likes silica, alumina or zirconia or a mixed oxide such as silica-alumina, in particular silica, alumina or silica-alumina.

In order to provide the solid catalyst system used it is preferred if a liquid liquid emulsion system is used. The process involves forming dispersing catalyst components (i) and (ii) in a solvent, and solidifying said dispersed droplets to form solid particles.

In particular, the method involves preparing a solution of one or more catalyst components; dispersing said solution in an solvent to form an emulsion in which said one or more catalyst components are present in the droplets of the dispersed phase; forming solid particles comprising the said catalyst, and optionally recovering said particles.

This process enables the manufacture of the solid catalyst system with improved morphology, e.g. with a predetermined spherical shape and particle size and without using any added external porous support material, such as an inorganic oxide, e.g. silica.

By the term "preparing a solution of one or more catalyst components" is meant that the catalyst forming compounds may be combined in one solution which is dispersed to the immiscible solvent, or, alternatively, at least two separate catalyst solutions for each part of the catalyst forming compounds may be prepared, which are then dispersed successively to the solvent. In an prefferd embodiment for forming the solid catalyst system at least two separate solutions for each or part of said catalyst may be prepared, which are then dispersed successively to the immiscible solvent.

More preferably, a solution of the complex comprising the transition metal compound and the cocatalyst is combined with the solvent to form an emulsion wherein that inert solvent forms the continuous liquid phase and the solution comprising the catalyst components forms the dispersed phase (discontinuous phase) in the form of dispersed droplets. The droplets are then solidified to form solid catalyst particles, and the solid particles are separated from the liquid and optionally washed and/or dried. The solvent forming the continuous phase may be immiscible to the catalyst solution at least at the conditions (e. g. temperatures) used during the dispersing step.

The term "immiscible with the catalyst solution" means that the solvent (continuous phase) is fully immiscible or partly immiscible i.e. not fully miscible with the dispersed phase solution.

Preferably said solvent is inert in relation to the compounds of the catalyst system to be produced. Full disclosure of the necessary process can be found in WO03/051934 which is herein incorporated by reference.

The inert solvent must be chemically inert at least at the conditions (e.g. temperature) used during the dispersing step. Preferably, the solvent of said continuous phase does not contain dissolved therein any significant amounts of catalyst forming compounds. Thus, the solid particles of the catalyst are formed in the droplets from the compounds which originate from the dispersed phase (i.e. are provided to the emulsion in a solution dispersed into the continuous phase).

The terms "immobilisation" and "solidification" are used herein interchangeably for the same purpose, i.e. for forming free flowing solid catalyst particles in the absence of an external porous particulate carrier, such as silica. The solidification happens thus within the droplets. Said step can be effected in various ways as disclosed in said WO03/051934. Preferably solidification is caused by an external stimulus to the emulsion system such as a temperature change to cause the solidification. Thus in said step the catalyst component (s) remain "fixed" within the formed solid particles. It is also possible that one or more of the catalyst components may take part in the solidification/immobilisation reaction.

Accordingly, solid, compositionally uniform particles having a predetermined particle size range can be obtained.

Furthermore, the particle size of the solid catalyst system used herein can be controlled by the size of the droplets in the solution, and spherical particles with a uniform particle size distribution can be obtained.

The principles for preparing two phase emulsion systems are known in the chemical field. Thus, in order to

form the two phase liquid system, the solution of the catalyst component(s) and the solvent used as the continuous liquid phase have to be essentially immiscible at least during the dispersing step. This can be achieved in a known manner e.g. by choosing said two liquids and/or the temperature of the dispersing step/solidifying step accordingly.

A solvent may be employed to form the solution of the catalyst component(s). Said solvent is chosen so that it dissolves said catalyst component(s). The solvent can be preferably an organic solvent such as used in the field, comprising an optionally substituted hydrocarbon such as linear or branched aliphatic, alicyclic or aromatic hydrocarbon, such as a linear or cyclic alkane, an aromatic hydrocarbon and/or a halogen containing hydrocarbon. Examples of aromatic hydrocarbons are toluene, benzene, ethylbenzene, propylbenzene, butylbenzene and xylene. Toluene is a preferred solvent. The solution may comprise one or more solvents. Such a solvent can thus be used to facilitate the emulsion formation, and usually does not form part of the solidified particles, but e.g. is removed after the solidification step together with the continuous phase.

Alternatively, a solvent may take part in the solidification, e.g. an inert hydrocarbon having a high melting point (waxes), such as above 40°C, suitably above 70°C, e. g. above 80°C or 90°C, may be used as solvents of the dispersed phase to immobilise the catalyst compounds within the formed droplets.

In another embodiment, the solvent consists partly or completely of a liquid monomer, e.g. liquid olefin monomer designed to be polymerised in a "prepolymerisation" inmobilisation step.

The solvent used to form the continuous liquid phase is a single solvent or a mixture of different solvents and may be immiscible with the solution of the catalyst components at least at the conditions (e.g. temperatures) used during the dispersing step. Preferably said solvent is inert in relation to said compounds.

The term "inert in relation to said compounds" means herein that the solvent of the continuous phase is chemically inert, i.e. undergoes no chemical reaction with any catalyst forming component. Thus, the solid particles of the catalyst are formed in the droplets from the compounds which originate from the dispersed phase, i.e. are provided to the emulsion in a solution dispersed into the continuous phase.

It is preferred that the catalyst components used for forming the solid catalyst will not be soluble in the solvent of the continuous liquid phase. Preferably, said catalyst components are essentially insoluble in said continuous phase forming solvent.

Solidification takes place essentially after the droplets are formed, i.e. the solidification is effected within the droplets e.g. by causing a solidifying reaction among the compounds present in the droplets. Furthermore, even if some solidifying agent is added to the system separately, it reacts within the droplet phase and no catalyst forming components go into the continuous phase.

The term "emulsion" used herein covers both bi-and multiphasic systems.

In a preferred embodiment said solvent forming the continuous phase is an inert solvent including a halogenated organic solvent or mixtures thereof, preferably fluorinated organic solvents and particularly semi, highly or perfluorinated organic solvents and functionalised derivatives thereof. Examples of the above-mentioned solvents are semi, highly or perfluorinated hydrocarbons, such as alkanes, alkenes and cycloalkanes, ethers, e.g. perfluorinated ethers and amines, particularly tertiary amines, and functionalised derivatives thereof. Preferred are semi, highly or perfluorinated, particularly perfluorinated hydrocarbons, e.g. perfluorohydrocarbons of e.g. $C_3$-$C_{30}$, such as $C_4$-$C_{10}$. Specific examples of suitable perfluoroalkanes and perfluorocycloalkanes include perfluoro-hexane, -heptane, - octane and -(methylcyclohexane). Semi fluorinated hydrocarbons relates particularly to semifluorinated n-alkanes, such as perfluoroalkyl-alkane.

"Semi fluorinated" hydrocarbons also include such hydrocarbons wherein blocks of -C-F and -C-H alternate. "Highly fluorinated" means that the majority of the -C-H units are replaced with -C-F units. "Perfluorinated" means that all -C-H units are replaced with -C-F units. See the articles of A. Enders and G. Maas in "Chemie in unserer Zeit", 34. Jahrg. 2000, Nr.6, and of Pierandrea Lo Nostro in "Advances in Colloid and Interface Science", 56 (1995) 245-287, Elsevier Science.

The emulsion can be formed by any means known in the art: by mixing, such as by stirring said solution vigorously to said solvent forming the continuous phase or by means of mixing mills, or by means of ultra sonic wave, or by using a so called phase change method for preparing the emulsion by first forming a homogeneous system which is then transferred by changing the temperature of the system to a biphasic system so that droplets will be formed. The two phase state is maintained during the emulsion formation step and the solidification step, as, for example, by appropriate stirring.

Additionally, emulsifying agents/emulsion stabilisers can be used, preferably in a manner known in the art, for facilitating the formation and/or stability of the emulsion. For the said purposes e.g. surfactants, e.g. a class based on hydrocarbons (including polymeric hydrocarbons with a molecular weight e.g. up to 10 000 and optionally interrupted with a heteroatom(s)), preferably halogenated hydrocarbons, such as semi- or highly fluorinated hydrocarbons optionally having a functional group selected e.g. from -OH, -SH, $NH_2$-, $NR''_2$. -COOH, $-COONH_2$, oxides of alkenes, $-CR''=CH_2$, where R" is hydrogen, or $C_1$-$C_{20}$ alkyl, $C_2$-$C_{20}$ alkenyl or $C_1$-$C_{20}$ alkynyl group, oxo-groups, cyclic ethers and/or any reactive derivative of these groups, like alkoxy, or carboxylic acid alkyl ester groups, or, preferably semi-, highly- or perfluorinated hydrocarbons having a functionalised terminal, can be used. The surfactants can be added to the catalyst

solution, which forms the dispersed phase of the emulsion, to facilitate the forming of the emulsion and to stabilize the emulsion.

Alternatively, an emulsifying and/or emulsion stabilising aid can also be formed by reacting a surfactant precursor bearing at least one functional group with a compound reactive with said functional group and present in the catalyst solution or in the solvent forming the continuous phase. The obtained reaction product acts as the actual emulsifying aid and or stabiliser in the formed emulsion system.

Examples of the surfactant precursors usable for forming said reaction product include e.g. known surfactants which bear at least one functional group selected e.g. from -OH, -SH, $NH_2$, $NR''_2$. -COOH, $-COONH_2$, oxides of alkenes, $-CR''=CH_2$, where R" is hydrogen, or $C_1$-$C_{20}$ alkyl, $C_2$-$C_{20}$ alkenyl or $C_2$-$C_{20}$ alkynyl group, oxo-groups, cyclic ethers with 3 to 5 ring atoms, and/or any reactive derivative of these groups, like alkoxy or carboxylic acid alkyl ester groups; e.g. semi-, highly or perfluorinated hydrocarbons bearing one or more of said functional groups. Preferably, the surfactant precursor has a terminal functionality as defined above.

The compound reacting with such surfactant precursor is preferably contained in the catalyst solution and may be a further additive or one or more of the catalyst forming compounds. Such compound is e.g. a compound of group 13 (e.g. MAO and/or an aluminium alkyl compound and/or a transition metal compound).

If a surfactant precursor is used, it is preferably first reacted with a compound of the catalyst solution before the addition of the transition metal compound. In one embodiment e.g. a highly fluorinated $C_{1-n}$ (suitably $C_4$-$C_{30}$ or $C_5$-$C_{15}$) alcohol (e.g. highly fluorinated heptanol, octanol or nonanol), oxide (e.g. propenoxide) or acrylate ester is reacted with a cocatalyst to form the "actual" surfactant. Then, an additional amount of cocatalyst and the transition metal compound is added to said solution and the obtained solution is dispersed to the solvent forming the continuous phase. The "actual" surfactant solution may be prepared before the dispersing step or in the dispersed system. If said solution is made before the dispersing step, then the prepared "actual" surfactant solution and the transition metal solution may be dispersed successively (e. g. the surfactant solution first) to the immiscible solvent, or be combined together before the dispersing step.

The solidification of the catalyst component(s) in the dispersed droplets can be effected in various ways, e.g. by causing or accelerating the formation of said solid catalyst forming reaction products of the compounds present in the droplets. This can be effected, depending on the used compounds and/or the desired solidification rate, with or without an external stimulus, such as a temperature change of the system.

In a particularly preferred embodiment, the solidification is effected after the emulsion system is formed by subjecting the system to an external stimulus, such as a temperature change. Temperature differences of e.g. 5 to 100°C, such as 10 to 100°C, or 20 to 90°C, such as 50 to 90°C.

The emulsion system may be subjected to a rapid temperature change to cause a fast solidification in the dispersed system. The dispersed phase may e. g. be subjected to an immediate (within milliseconds to few seconds) temperature change in order to achieve an instant solidification of the component (s) within the droplets. The appropriate temperature change, i. e. an increase or a decrease in the temperature of an emulsion system, required for the desired solidification rate of the components cannot be limited to any specific range, but naturally depends on the emulsion system, i. a. on the used compounds and the concentrations/ratios thereof, as well as on the used solvents, and is chosen accordingly. It is also evident that any techniques may be used to provide sufficient heating or cooling effect to the dispersed system to cause the desired solidification.

In one embodiment the heating or cooling effect is obtained by bringing the emulsion system with a certain temperature to an inert receiving medium with significantly different temperature, e. g. as stated above, whereby said temperature change of the emulsion system is sufficient to cause the rapid solidification of the droplets. The receiving medium can be gaseous, e. g. air, or a liquid, preferably a solvent, or a mixture of two or more solvents, wherein the catalyst component (s) is (are) immiscible and which is inert in relation to the catalyst component (s). For instance, the receiving medium comprises the same immiscible solvent used as the continuous phase in the first emulsion formation step.

Said solvents can be used alone or as a mixture with other solvents, such as aliphatic or aromatic hydrocarbons, such as alkanes. Preferably a fluorinated solvent as the receiving medium is used, which may be the same as the continuous phase in the emulsion formation, e. g. perfluorinated hydrocarbon.

Alternatively, the temperature difference may be effected by gradual heating of the emulsion system, e. g. up to 10°C per minute, preferably 0.5 to 6°C per minute and more preferably in 1 to 5°C per minute.

In case a melt of e. g. a hydrocarbon solvent is used for forming the dispersed phase, the solidifcation of the droplets may be effected by cooling the system using the temperature difference stated above.

Preferably, the "one phase" change as usable for forming an emulsion can also be utilised for solidifying the catalytically active contents within the droplets of an emulsion system by, again, effecting a temperature change in the dispersed system, whereby the solvent used in the droplets becomes miscible with the continuous phase, preferably a fluorous continuous phase as defined above, so that the droplets become impoverished of the solvent and the solidifying components remaining in the "droplets" start to solidify. Thus the immisciblity can be adjusted with respect to the solvents

and conditions (temperature) to control the solidification step.

The miscibility of e.g. organic solvents with fluorous solvents can be found from the literature and be chosen accordingly by a skilled person. Also the critical temperatures needed for the phase change are available from the literature or can be determined using methods known in the art, e. g. the Hildebrand-Scatchard-Theorie. Reference is also made to the articles of A. Enders and G. and of Pierandrea Lo Nostro cited above.

Thus, the entire or only part of the droplet may be converted to a solid form. The size of the "solidified"droplet may be smaller or greater than that of the original droplet, e. g. if the amount of the monomer used for the prepolymerisation is relatively large.

The droplet shape of the particles may be substantially maintained. The formed particles may have an average size range of 1 to 500 μm, e.g. 5 to 500 μm, advantageously 5 to 200 μm or 10 to 150 μm Even an average size range of 5 to 60 μm is possible. The size may be chosen depending on the polymerisation the catalyst is used for. Advantageously, the particles are essentially spherical in shape, they have a low porosity and a low surface area.

The formation of solution can be effected at a temperature of 0 to 100°C, e.g. at 20 to 80°C. The dispersion step may be effected at -20 to 100°C, e.g. at -10 to 70°C, such as at -5 to 30°C, e.g. around 0 °C.

To the obtained dispersion an emulsifying agent as defined above, may be added to improve/stabilise the droplet formation. The solidification of the catalyst component in the droplets is preferably effected by raising the temperature of the mixture, e.g. from 0 °C up to 100°C, e.g. up to 60 to 90°C, gradually. E.g. in 1 to 180 minutes, e.g. 1 to 90 or 5 to 30 minutes, or as a rapid heat change. Heating time is dependent on the size of the reactor.

During the solidification step, which is preferably carried out at 60 to 100 °C, preferably at 75 to 95 °C, (below the boiling point of the solvents) the solvents may preferably be removed and optionally the solids are washed with a wash solution, which can be any solvent or mixture of solvents such as those defined above and/or used in the art, preferably a hydrocarbon, such as pentane, hexane or heptane, suitably heptane. The washed catalyst can be dried or it can be slurried into an oil and used as a catalyst-oil slurry in polymerisation process.

All or part of the preparation steps can be done in a continuous manner. Reference is made to WO2006/069733 describing principles of such a continuous or semicontinuous preparation methods of the solid catalyst types, prepared via emulsion/solidification method.

The polymerization of propylene by using the above defined solid catalyst system may be effected in one or more, e.g. 1, 2 or 3, polymerization reactors, using conventional polymerization techniques, e.g. gas phase, solution phase, slurry or bulk polymerization.

In general, a combination of slurry (or bulk) and at least one gas phase reactor is often preferred, particularly with the reactor order being slurry (or bulk) then one or more gas phase reactors.

For slurry reactors, the reaction temperature will generally be in the range 60 to 110°C (e.g. 60 to 90°C), the reactor pressure will generally be in the range 5 to 80 bar (e.g. 20 to 60 bar), and the residence time will generally be in the range 0.1 to 5 hours (e.g. 0.3 to 2 hours). Propylene is usually used as reaction medium.

For gas phase reactors, the reaction temperature used will generally be in the range 60 to 115°C (e.g. 70 to 110°C), the reactor pressure will generally be in the range 10 to 25 bar, and the residence time will generally be 0.5 to 8 hours (e.g. 0.5 to 4 hours). The gas used will be propylene optionally as mixture with a non-reactive gas such as nitrogen or propane. In addition to actual polymerisation steps and reactors, the process can contain any additional polymerisation steps, like prepolymerisation step, and any further after reactor handling steps as known in the art.

Generally the quantity of solid catalyst system used will depend upon the nature of the catalyst, the reactor types and conditions and the properties desired for the polymer product. As is well known in the art hydrogen can be used for controlling the molecular weight of the polymer.

## EXAMPLES

### A.Measuring methods

The following definitions of terms and determination methods apply for the above general description of the invention as well as to the below examples unless otherwise defined.

### Quantification of microstructure by NMR spectroscopy

Quantitative nuclear-magnetic resonance (NMR) spectroscopy was used to quantify the stereo-regularity (tacticity) and regio-regularity of the polymers.

Quantitative $^{13}C$ {$^{1}H$} NMR spectra were recorded in the solution-state using a Bruker Advance III 400 NMR spectrometer operating at 400.15 and 100.62 MHz for $^{1}H$ and $^{13}C$ respectively. All spectra were recorded using a $^{13}C$ optimised 10 mm extended temperature probehead at 125°C using nitrogen gas for all pneumatics.

For polypropylene homopolymers approximately 200 mg of material was dissolved in 1,2-tetrachloroethane-$d_2$ (TCE-

$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra

Quantitative $^{13}C\{^1H\}$ NMR spectra were processed, integrated and relevant quantitative properties determined from the integrals using proprietary computer programs.

For polypropylene homopolymers all chemical shifts are internally referenced to the methyl isotactic pentad (mmmm) at 21.85 ppm.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251).

Specifically the influence of regio defects and comonomer on the quantification of the tacticity distribution was corrected for by subtraction of representative regio defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\,\% = 100 * (mmmm\ /\ sum\ of\ all\ pentads)$$

The presence of 2,1 erythro regio defects was indicated by the presence of the two methyl sites at 17.7 and 17.2 ppm and confirmed by other characteristic sites.

Characteristic signals corresponding to other types of regio defects were not observed (Resconi, L., Cavallo, L., Fait, A., Piemontesi, F., Chem. Rev. 2000, 100, 1253).

The amount of 2,1 erythro regio defects was quantified using the average integral of the two characteristic methyl sites at 17.7 and 17.2 ppm:

$$P_{21e} = (I_{e6} + I_{e8}) / 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio defects:

$$P_{total} = P_{12} + P_{21e}$$

The mole percent of 2,1 erythro regio defects was quantified with respect to all propene:

$$[21e]\,mol\% = 100 * (P_{21e} / P_{total})$$

**$MFR_2$ (230 °C) is** measured according to ISO 1133 (230 °C, 2.16 kg load)

**The xylene solubles (XCS, wt.-%):** Content of xylene cold solubles (XCS) is determined at 25 °C according ISO 16152; first edition; 2005-07-01.

**Melting temperature ($T_m$) and heat of fusion ($H_f$), crystallization temperature ($T_c$) and heat of crystallization ($H_c$):** measured with Mettler TA820 differential scanning calorimetry (DSC) on 5 to 10 mg samples. DSC is run according to ISO 11357-3:1999 in a heat / cool / heat cycle with a scan rate of 10 °C/min in the temperature range of +23 to +210°C. Crystallization temperature and **heat of crystallization** (He) are determined from the cooling step, while melting temperature and **heat of fusion** ($H_f$) are determined from the second heating step.

**Porosity:** BET with $N_2$ gas, ASTM 4641, apparatus Micromeritics Tristar 3000; sample preparation: at a temperature of 50 °C, 6 hours in vacuum.
**Surface area:** BET with $N_2$ gas ASTM D 3663, apparatus Micromeritics Tristar 3000: sample preparation at a temperature of 50°C, 6 hours in vacuum.

**Compression moulding:**

Samples have been prepared according to ISO 173-2, on a frame mould:
Conditions for compression moulding of test specimens:

| | | |
|---|---|---|
| Moulding temperature | [°C] | 210 |
| Average cooling rate | [°C/min] | 15 |
| Demoulding temperature | [°C] | ≤ 40 |
| Full Pressure | [MPa] | 5 |
| Full-pressure time | [min] | 5 |
| Preheating pressure | [MPa] | Contact |
| Preheating time | [min] | 10 |

**WAXS (Wide angle X-ray Scattering) measurement:**

To measure wide-angle X-ray scattering (WAXS) of the samples a Bruker D8 Discover was used. The diffractometer was equipped with an X-ray tube with a copper target operating at 30 kV and 20mA and a GADDS 2-D detector. To direct the beam onto the surface, a point collimation (0.5 mm) was used. The measurement was done in reflection geometry, and 2θ angle in the range from 10° to 32.5° were measured. Data were collected for 300 s.
Intensity vs. 2-theta curve was acquired with the same measurement parameters on an amorphous polypropylene sample, which was prepared by solvent extraction. An amorphous halo was obtained by smoothing the curve. The amorphous halo has been subtracted from the measured intensity vs. 2-theta curve to result in the crystalline curve.
The crystallinity index Xc can be defined with the area under the crystalline curve and the original spectrum using Challa, Hermans and Weidinger method [Challa G, Hermans PH, Weidinger A, Makromol. Chem. 56, 169 (1962)] as:

$$X_c = \frac{\text{area under crystalline curve}}{\text{area under original spectrum}} \text{ x } 100$$

The amount of β-form of the polypropylene within the crystalline phase $K_\beta$ is calculated using Jones method [Turner-Jones A, Aizlewood JM, Beckett DR, Makromol. Chem. 75, 134 (1974)] according to the following equation:

$$K_\beta = \frac{I^\beta(300)}{I^\alpha(110) + I^\alpha(040) + I^\alpha(130) + I^\beta(300)}$$

where, $I^\beta(300)$ is the intensity of βP(300) peak, $I^\alpha(110)$ is the intensity of α(110) peak, $I^\alpha(040)$ is the intensity of α(040) peak and $I^\alpha(130)$ is the intensity of α(130) peak obtained after subtracting the amorphous halo.
The amount of γ-form of iPP within the crystalline phase Kγ is calculated using the method developed by Pae [Pae KD, J. Polym. Sci., Part A, 6, 657 (1968)] as:

$$K_\gamma = \frac{I^\gamma(117)}{I^\alpha(130) + I^\gamma(117)}$$

where, $I^\alpha(130)$ is the intensity of α(130) peak and $I^\gamma(117)$ is the intensity of γ(117) peak obtained after subtracting a base line joining the base of these peaks.
Quantification of three-phase crystalline system has been carried out following the procedure explained in Obadal M, Cermak R, Stoklasa K, Macromol. Rapid Commun. 26, 1253 (2005). For three-phase crystalline systems the following

equations have been used to determine Kα (amount of α-phase), Kβ (amount of β-phase) and Kγ (amount of γ-phase):

$$K_\beta = \frac{I^\beta(300)}{I^\alpha(110) + I^\alpha(040) + I^\alpha(130) + I^\beta(300) + I^\gamma(117)}$$

$$K_{\alpha+\gamma} = 1 - K_\beta ,$$

$$K_\gamma = G \times K_{\alpha+\gamma},$$

and

$$K_\alpha = 1 - K_\beta - K_\gamma$$

**B. Examples**

**B.1 Preparation of the prepolymerized, solid catalysts**

**Catalyst 1**

**Metallocene MC-1** is rac-dimethylsilanediylbis[2-methyl-4-(3,5-di-tert-butylphenyl)-7-methoxy-indenyl]zirconium dichloride, and was synthesized as described by Rieger and Schöbel in Chemistry-A European Journal, Volume 18, Issue 14, April 2, 2012, Pages: 4174-4178, supporting information.

**Catalyst 2:**

The catalyst was prepared as described in example 1 (synthesis) and example 10 (prepolymerization) of WO 2010052263 Al, using metallocene rac-methyl(cyclohexyl)silanediylbis(2-methyl-4-(4-tert-butylphenyl)indenyl) zirconium dichloride.

**B.2 Polymerization examples**

**Example 1:**

**Propylene polymerization with Catalyst 1 (containing metallocene M:C1) to give polypropylene PP1**

A stirred autoclave (double helix stirrer) with a volume of 21.2 $dm^3$ containing -0.4 bar-g of propylene was filled with additional 5.43 kg propylene. After adding 0.4 NL $H_2$ and 0.97 mmol of triethylaluminium (1 molar solution in hexane) using a stream of 246 g propylene, the solution was stirred at 20°C and 150 rpm. After 20 min the reactor temperature was increased to 40 °C and 200 mg of the solid, pre-polymerized catalyst (degree of pre-polymerisation 1.1) was contacted with 5 ml perfluoro-1,3-dimethylcyclohexane under $N_2$-pressure for 60 sec into a 5-mL stainless steel vial, and flushed into the reactor with 246 g propylene. After that the stirring speed was increased to 350 rpm and the reactor was heated to 70°C. After 120 min, the reaction was stopped by adding 5 ml methanol, cooling the reactor and flashing the volatile ingredients. After purging the reactor 3 times with $N_2$ and one vacuum/$N_2$ cycle, the product was taken out and dried over night in a hood and additionally 2 hours in a vacuum drying oven at 60°C to yield 1412 g of polypropylene. After weighing, the material was additivated with 0.2w% Ionol and 0.1w.% PEPQ. The polymer had an MFR(2) of 2.4 g/10min. The other polymer properties are listed in table 1.

**Example 2:**

**Propylene polymerization with Catalyst 2 (containing metallocene MC2) to give polypropylene PP2.**

A stirred autoclave (double helix stirrer) with a volume of 21.2 $dm^3$ containing 0.2 barg propylene was filled with additional 3.97 kg propylene. After adding 0.4 NL H2 and 0.73 mmol triethylaluminium (1 molar solution in hexane)

using a stream of 250 g propylene the solution was stirred at 20 °C and 150 rpm. After 20 min, 399 mg of the solid, pre-polymerized catalyst 2 (degree of prepolymerisation 3.1) was contacted with 5 ml perfluoro-1,3-dimethylcyclohexane under N2-pressure (at ~10 barg) for 60 sec into a 5-mL stainless-steel vial and then washed into the reactor with 250 g propylene. Stirring speed was increased to 250 rpm and pre-polymerisation is running 15 min at 20°C. After that the stirring speed was increased to 350 rpm. 1.6 NL of H2 was added and the temperature in the reactor increased to 70°C in 19 min. This temperature was held for 30 min then the reaction was stopped by adding 5 ml methanol, cooling of reactor and flashing of volatile ingredients. After 3 times spilling the reactor with N2 and one vacuum/N2 cycle, the product was taken out and dried over night in a hood and additionally 2 hours in a vacuum drying oven at 60°C, yielding 1201 g of polypropylene, which had a MFR(230°C,2.16kg) of 6.2 g/10min. After weighing the material was additivated with 0.2 wt% Ionol and 0.1 wt.-% PEPQ.

**Polymer sample preparation:**

In a first step, the polymer powder was pressed at 100 Bar, 190°C for 5 minutes to a 0.5 mm plate. The pressed specimen was removed and transferred to a second press, held at room temperature.
In a second step, the specimen from the first step was pressed at 100 Bar for 5 minutes, and allowed to cool down to room temperature.
The specimen as prepared above was placed in a DSC pan and heated in the DSC temperature chamber to 200°C, and kept at this temperature for 10 minutes.
Then, the specimen was subjected to different cooling rates in order to cool them from the melt to ambient temperature. The molten polymer was cooled to room temperature at cooling rates of 1, 10, 30, 100 and 200°C/min. The so prepared samples were analyzed by WAXS for phase composition β-phase content).

**Table1:** Properties of the polypropylenes and (compression) moulded products thereof

| | | **Ex. 1** | **Ex. 2** |
|---|---|---|---|
| Catalyst | [-] | MC1 | MC2 |
| Polymer | | PP1 | PP2 |
| MFR(230°C, 2.16kg) | [g/10min] | 2.4 | 6.2 |
| mmmm | [%] | 99.3 | 98.9 |
| mrrm | [%] | 0.15 | 0.23 |
| 2,1-regio defects | [%] | 0.47 | 0.82 |
| Tm | [°C] | 157 | 151 |
| XCS | [wt.-%] | 0.3 | 0.4 |
| β-value by cooling rate of | | | |
| 1 °C/min | [%] | 20 | 7 |
| 10°C/min | [%] | 13 | 2 |
| 30 °C/min | [%] | 11 | n.d. |
| 100 °C/nun | [%] | 9 | n.d. |
| 200 °C/Min | [%] | trace | n.d. |
| n.d. not determined | | | |

## Claims

1. A process for producing a molded isotactic propylene homopolymer with beta phase, the process comprising the steps of

(a) heating an isotactic propylene homopolymer powder with a melt flow rate $MFR_2$ (230 °C) measured according to ISO 1133 of equal or higher to 1.0 g/10min, and being free of beta-nucleating agent, to a temperature equal or above the melting temperature ($T_m$) measured by differential scanning calorimetry (DSC) of said powder,

and holding the temperature for at least 1 minute; and
(c) cooling the molded isotactic propylene homopolymer to ambient temperature.

**2.** The process according to claim 1, wherein in step (a) simultaneously pressure in the range of 1 to 140 MPa is applied, obtaining thereby a compression molded isotactic propylene homopolymer.

**3.** The process according to claim 1 or 2, wherein between step (a) and (c) a step (b) takes place, wherein further in step (b) the pressure of step (a) is held without further heating, the time applying the pressure in step (b) is preferably at least 1 min.

**4.** The process according to claim 1 or 2, wherein the temperature in step (a) is in the range of 170 to 240 °C.

**5.** The process according to any one of preceding claims, wherein the cooling rate in step (c) is 100 to 0.1 °C/min.

**6.** The process according to any one of preceding claims, wherein the process comprises additionally the following steps:

(d) heating the (compression) molded product obtained after step (c) to a temperature equal or above the melting temperature ($T_m$) measured by differential scanning calorimetry (DSC) of the propylene homopolymer;
(e) optionally forming a molded product;
(f) cooling the product of step (d) or (e) at a cooling rate in a range from 100°C/min to 0.1 °C/min.

**7.** The process according to claim 6, wherein the temperature of step (d) is applied between 1 and 15 minutes.

**8.** The process according to claim 6 or 7, wherein the temperature of step (d) is not higher than 300 °C.

**9.** The process according to any one of preceding claims 6 to 8, wherein the cooling rate of step (f) is kept constant.

**10.** The process according to any one of preceding claims, wherein isotactic polypropylene homopolymer powder has

(a) a pentad isotacticity (mmmm) of equal or more than 98.0 mol.% as determined by $^{13}C$ NMR spectroscopy, and/or
(b) a melting temperature ($T_m$) measured by differential scanning calorimetry (DSC) of at least 140.0 °C.

**11.** The process according to any one of preceding claims, wherein isotactic polypropylene homopolymer powder has

(a) a content of mmn stereo-defect of below 1.0 mol.%,
and/or
(c) <2,1> erythro regio-defects of equal or more than 0.1 to equal or below 1.2 mol.-%, preferably of equal or more than 0.10 to equal or below 0.80 mol.-%.

**12.** The process according to any one of the preceding claims, wherein the molded isotactic polypropylene homopolymer has 5 to 90 %, preferably 10 to 90 % of beta-phase, wherein said beta-phase is measured via wide angle X-ray scattering (WAXS).

**13.** The process according to any one of preceding claims, wherein isotactic polypropylene homopolymer powder has been produced in the presence of catalyst system comprising

(i) a complex of formula (I)

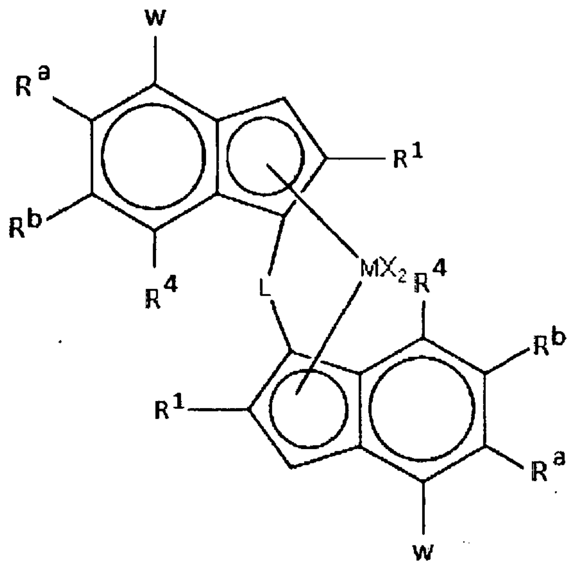

(I)

wherein

M is zirconium or hafnium;
each X is a sigma ligand;
L is a divalent bridge selected from $-R'_2C-$, $-R'_2C-CR'_2-$, $-R'_2Si-$, $-R'_2Si-SiR'_2-$, $-R'_2Ge-$, wherein each R' is independently a hydrogen atom, $C_1$-$C_{20}$-hydrocarbyl, tri($C_1$-$C_{20}$-alkyl)silyl, $C_6$-$C_{20}$-aryl, $C_7$-$C_{20}$-arylalkyl or $C_7$-$C_{20}$-alkylaryl;
each $R^1$ is independently a $C_1$-$C_{20}$ hydrocarbyl radical optionally containing one or more heteroatoms from groups 14-16, or is a $C_4$-$C_{20}$ hydrocarbyl radical branched at the β-atom to the cyclopentadienyl ring, optionally containing one or more heteroatoms belonging to groups 14-16, or is a $C_3$-$C_{20}$ hydrocarbyl radical branched at the β-atom to the cyclopentadienyl ring where the β-atom is an Si-atom;
each $R^3$ is independently hydrogen or an aliphatic $C_1$-$C_{20}$ hydrocarbyl group optionally containing one or more heteroatoms from groups 14-16;
each $R^b$ is independently hydrogen or an aliphatic $C_1$-$C_{20}$ hydrocarbyl group optionally containing one or more heteroatoms from groups 14-16; or
an $R^a$ and $R^b$ group on adjacent carbon atoms can be taken together to form a 5 membered saturated carbon ring which is optionally substituted by n groups $R^{18}$, n being from 0 to 3;
each $R^{18}$ is same or different and may be a $C_1$-$C_{20}$ hydrocarbyl group, or a $C_1$-$C_{20}$ hydrocarbyl radical optionally containing one or more heteroatoms belonging to groups 14-16;
each $R^4$ is independently an aliphatic $C_{1-20}$ hydrocarbyl group optionally containing one or more heteroatoms from groups 14-16 with at least 2 non-H atoms, or is a hydrogen atom or a $C_{1-6}$-hydrocarbyl radical;
each W group is independently an aryl or heteroaryl group having up to 20 carbon atoms optionally substituted by one or more groups $R^5$;
each $R^5$ is the same or different and is a $C_1$-$C_{20}$ hydrocarbyl group optionally containing one or more heteroatoms belonging to groups 14-16; or two $R^5$ groups on adjacent carbon atoms taken together can form a fused 5 or 6 membered non aromatic ring with the W group, said ring being itself optionally substituted with one or more $C_1$-$C_{20}$ hydrocarbyl group(s), or two adjacent $R^5$ groups taken together can form a further mono or multicyclic ring condensed to W optionally substituted by one or two groups $R^5$;
and

(ii) optionally a cocatalyst comprising a compound of a group 13 metal.

**14.** Molded or compression molded isotactic propylene homopolymer obtainable by a process according to any one of the preceding claims.

**15.** Molded or compression molded isotactic propylene homopolymer according to claim 14 having 5 to 90 %, preferably

10 to 90 %, of beta-phase, wherein said beta-phase is measured via wide angle X-ray scattering (WAXS).

**Patentansprüche**

1. Verfahren zur Herstellung eines geformten isotaktischen Propylen-Homopolymers mit Beta-Phase, wobei das Verfahren die Schritte umfasst von

   (a) Erhitzen eines isotaktischen Propylen-Homopolymer-Pulvers mit einer Schmelze-Fließ-Rate $MFR_2$ (230°C), gemessen gemäß ISO 1133, von gleich oder höher als 1,0 g/10 min, und das frei von Beta-Keimbildungsmittel ist, auf eine Temperatur gleich oder oberhalb der Schmelz-Temperatur ($T_m$), gemessen durch dynamische Differenz-Kälorimetrie (DSC) von dem Pulver, und Halten der Temperatur für mindestens 1 Minute; und
   (c) Kühlen des geformten isotaktischen Propylen-Homopolymers auf Umgebungs-Temperatur.

2. Verfahren nach Anspruch 1, wobei in Schritt (a) gleichzeitig Druck in dem Bereich von 1 bis 140 MPa angelegt wird, wodurch ein Druck-geformtes isotaktisches Propylen-Homopolymer erhalten wird.

3. Verfahren nach Anspruch 1 oder 2, wobei zwischen Schritt (a) und (c) ein Schritt (b) stattfindet, wobei weiterhin in Schritt (b) der Druck von Schritt (a) ohne weiteres Erhitzen gehalten wird, wobei die Zeit, in der der Druck in Schritt (b) angelegt wird, vorzugsweise mindestens 1 min ist.

4. Verfahren nach Anspruch 1 oder 2, wobei die Temperatur in Schritt (a) in dem Bereich von 170 bis 240°C liegt.

5. Verfahren nach einem der vorangehenden Ansprüche, wobei die Kühl-Rate in Schritt (c) 100 bis 0,1°C/min ist.

6. Verfahren nach einem der vorangehenden Ansprüche, wobei das Verfahren zusätzlich die nachstehenden Schritte umfasst:

   (d) Erhitzen des nach Schritt (c) erhaltenen (Druck-) geformten Produkts auf eine Temperatur gleich oder oberhalb der Schmelz-Temperatur ($T_m$), gemessen durch dynamische Differenz-Kalorimetrie (DSC) des Propylen-Homopolymers;
   (e) gegebenenfalls Bilden eines geformten Produkts;
   (f) Kühlen des Produkts von Schritt (d) oder (e) bei einer Kühl-Rate in einem Bereich von 100°C/min bis 0,1°C/min.

7. Verfahren nach Anspruch 6, wobei die Temperatur von Schritt (d) zwischen 1 und 15 Minuten angewendet wird.

8. Verfahren nach Anspruch 6 oder 7, wobei die Temperatur von Schritt (d) nicht höher als 300°C ist.

9. Verfahren nach einem der vorangehenden Ansprüche 6 bis 8, wobei die Kühl-Rate von Schritt (f) konstant gehalten wird.

10. Verfahren nach einem der vorangehenden Ansprüche, wobei isotaktisches Polypropylen-Homopolymer-Pulver aufweist

    (a) eine Pentaden-Isotaktizität (mmmm) von gleich oder mehr als 98,0 Mol-%, wie durch $^{13}C$ NMR Spektroskopie bestimmt,
    und/oder
    (b) eine Schmelz-Temperatur ($T_m$), gemessen durch dynamische Differenz-Kalorimetrie (DSC), von mindestens 140,0°C.

11. Verfahren nach einem der vorangehenden Ansprüche, wobei isotaktisches Polypropylen-Homopolymer-Pulver aufweist

    (a) einen Gehalt an mrrm-Stereo-Defekt von unter 1,0 Mol-%,
    und/oder
    (c) <2,1> Erythro-Regio-Defekte von gleich oder mehr als 0,1 bis gleich oder unter 1,2 Mol-%, vorzugsweise von gleich oder mehr als 0,10 bis gleich oder unter 0,80 Mol-%.

**12.** Verfahren nach einem der vorangehenden Ansprüche, wobei das geformte isotaktische Polypropylen-Homopolymer 5 bis 90 %, vorzugsweise 10 bis 90 % der Beta-Phase, aufweist, wobei die Beta-Phase über Weitwinkel-Röntgen-Streuung (WAXS) gemessen wird.

**13.** Verfahren nach einem der vorangehenden Ansprüche, wobei isotaktisches Polypropylen-Homopolymer-Pulver in Gegenwart eines Katalysator-Systems hergestellt wurde, umfassend

(i) einen Komplex der Formel (I)

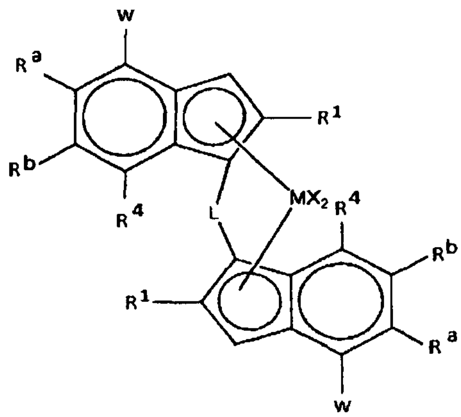

(I)

worin

M Zirkonium oder Hafnium darstellt;
jedes X einen Sigma-Liganden darstellt;
L eine zweiwertige Brücke darstellt, ausgewählt aus $-R'_2C-$, $-R'_2C-CR'_2-$, $-R'_2Si-$, $-R'_2Si-SiR'_2-$, $-R'_2Ge-$, wobei jedes R' unabhängig ein Wasserstoff-Atom, $C_1$-$C_{20}$-Kohlenwasserstoff, Tri($C_1$-$C_{20}$-alkyl) silyl, $C_6$-$C_{20}$-Aryl, $C_7$-$C_{20}$-Arylalkyl oder $C_7$-$C_{20}$-Alkylaryl darstellt;
jedes $R^1$ unabhängig einen $C_1$-$C_{20}$ Kohlenwasserstoff-Rest, der gegebenenfalls ein oder mehrere Heteroatome von Gruppen 14-16 enthält, darstellt, oder einen $C_4$-$C_{20}$ Kohlenwasserstoff-Rest verzweigt an dem $\beta$-Atom zu dem Cyclopentadienyl-Ring, der gegebenenfalls ein oder mehrere Heteroatome enthält, die zu Gruppen 14-16 gehören, darstellt, oder einen $C_3$-$C_{20}$ Kohlenwasserstoff-Rest darstellt, der an dem $\beta$-Atom zu dem Cyclopentadienyl-Ring verzweigt ist, wobei das $\beta$-Atom ein Si-Atom darstellt;
jedes $R^a$ unabhängig Wasserstoff oder eine aliphatische $C_1$-$C_{20}$ Kohlenwasserstoff-Gruppe, die gegebenenfalls ein oder mehrere Heteroatome von Gruppen 14-16 enthält, darstellt;
jedes $R^b$ unabhängig Wasserstoff oder eine aliphatische $C_1$-$C_{20}$ Kohlenwasserstoff-Gruppe, die gegebenenfalls ein oder mehrere Heteroatome von Gruppen 14-16 enthält, darstellt; oder
eine Gruppe $R^a$ und $R^b$ an benachbarten Kohlenstoff-Atomen zusammen genommen werden kann, um einen 5-gliedrigen gesättigten Kohlenstoff-Ring zu bilden, der gegebenenfalls mit n Gruppen $R^{18}$ substituiert ist, wobei n von 0 bis 3 ist;
jedes $R^{18}$ gleich oder verschieden ist und eine $C_1$-$C_{20}$ Kohlenwasserstoff-Gruppe oder ein $C_1$-$C_{20}$ Kohlenwasserstoff-Rest, der gegebenenfalls ein oder mehrere Heteroatome, die zu Gruppen 14-16 gehören, enthält, sein kann;
jedes $R^4$ unabhängig eine aliphatische $C_{1-20}$ Kohlenwasserstoff-Gruppe, die gegebenenfalls ein oder mehrere Heteroatome von Gruppen 14-16 mit mindestens 2 nicht-H-Atomen enthält, darstellt oder ein Wasserstoff-Atom oder einen $C_1$-$C_6$-Kohlenwasserstoff-Rest darstellt;
jede Gruppe W unabhängig eine Aryl- oder Heteroaryl-Gruppe mit bis zu 20 Kohlenstoff-Atomen, die gegebenenfalls mit einer oder mehreren Gruppen $R^5$ substituiert sind, darstellt;
jedes $R^5$ das Gleiche oder verschieden ist und eine $C_1$-$C_{20}$ Kohlenwasserstoff-Gruppe darstellt, die gegebenenfalls ein oder mehrere Heteroatome, die zu Gruppen 14-16 gehören, enthält; oder zwei Gruppen $R^5$ an benachbarten Kohlenstoff-Atomen zusammen genommen werden können, um einen kondensierten 5- oder 6-gliedrigen nicht-aromatischen Ring mit der Gruppe W zu bilden, wobei der Ring selbst gegebenenfalls mit einer oder mehreren $C_1$-$C_{20}$ Kohlenwasserstoff-Gruppe(n) substituiert ist, oder zwei benachbarte Gruppen $R^5$ zusammen genommen einen weiteren einfachen oder mehrfachen cyclischen Ring bilden können,

der, gegebenenfalls substituiert mit einer oder zwei Gruppen $R^5$, an W kondensiert ist; und

(ii) gegebenenfalls einen Cokatalysator, umfassend eine Verbindung von einem Metall der Gruppe 13.

**14.** Geformtes oder Druck-geformtes isotaktisches Propylen-Homopolymer, erhältlich durch ein Verfahren nach einem der vorangehenden Ansprüche.

**15.** Geformtes oder Druck-geformtes isotaktisches Propylen-Homopolymer nach Anspruch 14 mit 5 bis 90 %, vorzugsweise 10 bis 90 %, an Beta-Phase, wobei die Beta-Phase über Weitwinkel-Röntgen-Streuung (WAXS) gemessen wird.

## Revendications

**1.** Procédé pour produire un homopolymère de propylène isotactique moulé avec une phase bêta, lequel procédé comprend les étapes

(a) de chauffage d'une poudre d'homopolymère de propylène isotactique présentant un indice de fluage $MFR_2$ (230°C), mesuré conformément à la norme ISO 1133, égal ou supérieur à 1,0 g/10 min, et exempt d'agent de $\beta$-nucléation, à une température égale ou supérieure au point de fusion ($T_m$), mesuré par calorimétrie à balayage différentiel (DSC), de ladite poudre, et de maintien de la température pendant au moins 1 minute ; et
(c) de refroidissement de l'homopolymère de propylène isotactique moulé à la température ambiante.

**2.** Procédé selon la revendication 1, dans lequel, dans l'étape (a), simultanément une pression située dans la plage allant de 1 à 140 MPa est appliquée, ce qui donne ainsi un homopolymère de propylène isotactique moulé par compression.

**3.** Procédé selon la revendication 1 ou 2, dans lequel, entre l'étape (a) et l'étape (c), se déroule une étape (b), et dans lequel en outre, dans l'étape (b), la pression de l'étape (a) est maintenue sans chauffage supplémentaire, le temps d'application de la pression dans l'étape (b) étant de préférence d'au moins 1 minute.

**4.** Procédé selon la revendication 1 ou 2, dans lequel la température dans l'étape (a) est située dans la plage allant de 170 à 240°C.

**5.** Procédé selon l'une quelconque des revendications précédentes, dans lequel la vitesse de refroidissement dans l'étape (c) est de 100 à 0,1°C/min.

**6.** Procédé selon l'une quelconque des revendications précédentes, lequel procédé comprend de plus les étapes suivantes :

(d) de chauffage du produit moulé (par compression) obtenu après l'étape (c) à une température égale ou supérieure au point de fusion ($T_m$), mesuré par calorimétrie à balayage différentiel (DSC), de l'homopolymère de propylène ;
(e) éventuellement de formation d'un produit moulé ;
(f) de refroidissement du produit de l'étape (d) ou (e) à une vitesse située dans la plage allant de 100°C/min à 0,1°C/min.

**7.** Procédé selon la revendication 6, dans lequel la température de l'étape (d) est appliquée entre 1 et 15 minutes.

**8.** Procédé selon la revendication 6 ou 7, dans lequel la température de l'étape (d) ne dépasse pas 300°C.

**9.** Procédé selon l'une quelconque des revendications 6 à 8, dans lequel la vitesse de refroidissement de l'étape (f) est maintenue constante.

**10.** Procédé selon l'une quelconque des revendications précédentes, dans lequel la poudre d'homopolymère de propylène isotactique présente

(a) une isotacticité de pentade (mmmm), telle que déterminée par spectroscopie RMN-$^{13}$C, égale ou supérieure

à 98,0 % en moles,
et/ou
(b) un point de fusion ($T_m$), déterminé par calorimétrie à balayage différentiel (DSC), d'au moins 140,0°C.

**11.** Procédé selon l'une quelconque des revendications précédentes, dans lequel la poudre d'homopolymère de propylène isotactique présente

(a) une teneur en stéréo-défauts mrrm inférieure à 1,0 % en moles,
et/ou
(c) des régio-défauts érythro <2,1> à raison de 0,1 ou plus à 1,2 % en moles ou moins, de préférence de 0,10 ou plus à 0,80 % en moles ou moins.

**12.** Procédé selon l'une quelconque des revendications précédentes, dans lequel l'homopolymère de polypropylène isotactique moulé présente 5 à 90 %, de préférence 10 à 90 % de phase β, ladite phase β étant mesurée via dispersion des rayons X en grand angle (WAXS).

**13.** Procédé selon l'une quelconque des revendications précédentes, dans lequel la poudre d'homopolymère de polypropylène isotactique a été produite en présence d'un système catalyseur comprenant

(i) un complexe de formule (I)

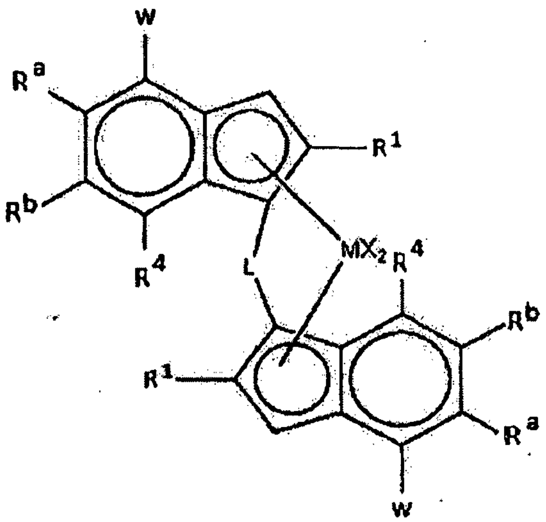

(I)

dans laquelle

M est le zirconium ou le hafnium ;
chaque X est un ligand sigma ;
L est un pont divalent choisi parmi $-R'_2C-$, $-R'_2C-CR'_2-$, $-R'_2Si-$, $-R'_2Si-SiR'_2-$, $-R'_2Ge-$, où chaque R' est indépendamment un atome d'hydrogène, ou un radical hydrocarbyle en $C_1$ à $C_{20}$, tri(alkyle en $C_1$ à $C_{20}$) silyle, aryle en $C_6$ à $C_{20}$, arylalkyle en $C_7$ à $C_{20}$ ou alkylaryle en $C_7$ à $C_{20}$ ;
chaque $R^1$ est indépendamment un radical hydrocarbyle en $C_1$ à $C_{20}$ contenant éventuellement un ou plusieurs hétéroatome(s) des Groupes 14-16, ou est un radical hydrocarbyle en $C_4$ à $C_{20}$ ramifié au niveau de l'atome β vis-à-vis du cycle cyclopentadiényle, contenant éventuellement un ou plusieurs hétéroatome(s) appartenant aux Groupes 14-16, ou est un radical hydrocarbyle en $C_3$ à $C_{20}$ ramifié au niveau de l'atome β vis-à-vis du cycle cyclopentadiényle, où l'atome β est un atome Si ;
chaque $R^a$ est indépendamment l'hydrogène ou un groupe hydrocarbyle aliphatique en $C_1$ à $C_{20}$ contenant éventuellement un ou plusieurs hétéroatome(s) des Groupes 14-16 ;
chaque $R^b$ est indépendamment l'hydrogène ou un groupe hydrocarbyle aliphatique en $C_1$ à $C_{20}$ contenant éventuellement un ou plusieurs hétéroatome(s) des Groupes 14-16 ; ou bien
un groupe $R^a$ et un groupe $R^b$ sur des atomes de carbone adjacents peuvent être pris ensemble pour

former un cycle carboné saturé à 5 chaînons qui est éventuellement substitué par n groupes $R^{18}$, n valant de 0 à 3 ;
chaque $R^{18}$ est identique ou différent et peut être un groupe hydrocarbyle en $C_1$ à $C_{20}$, ou un radical hydrocarbyle en $C_1$ à $C_{20}$ contenant éventuellement un ou plusieurs hétéroatome(s) appartenant aux Groupes 14-16 ;
chaque $R^4$ est indépendamment un groupe hydrocarbyle aliphatique en $C_1$ à $C_{20}$ contenant éventuellement un ou plusieurs hétéroatome(s) des Groupes 14-16 avec au moins 2 atomes non-H, ou est un atome d'hydrogène ou un radical hydrocarbyle en $C_1$ à $C_6$ ;
chaque groupe W est indépendamment un groupe aryle ou hétéroaryle ayant jusqu'à 20 atomes de carbone, éventuellement substitué par un ou plusieurs groupe(s) $R^5$;
chaque $R^5$ est identique ou différent et est un groupe hydrocarbyle en $C_1$ à $C_{20}$ contenant éventuellement un ou plusieurs hétéroatome(s) appartenant aux Groupes 14-16 ;
ou bien deux groupes $R^5$ sur des atomes de carbone adjacents, pris ensemble, peuvent former avec le groupe W un cycle non aromatique condensé à 5 ou 6 chaînons, ledit cycle étant lui-même éventuellement substitué par un ou plusieurs groupe(s) hydrocarbyle en $C_1$ à $C_{20}$, ou bien deux groupes $R^5$ adjacents, pris ensemble, peuvent former un autre cycle mono- ou poly-cyclique condensé à W éventuellement substitué par un ou deux groupe(s) $R^5$ ;
et

(ii) éventuellement un co-catalyseur comprenant un composé d'un métal du Groupe 13.

**14.** Homopolymère de propylène isotactique moulé ou moulé par compression pouvant être obtenu par un procédé selon l'une quelconque des revendications précédentes.

**15.** Homopolymère de propylène isotactique moulé ou moulé par compression selon la revendication 14, présentant 5 à 90 %, de préférence 10 à 90 % de phase $\beta$, ladite phase $\beta$ étant mesurée via dispersion des rayons X en grand angle (WAXS).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 03094832 A
- WO 201057841 A
- WO 03051934 A
- WO 2006069733 A
- WO 2010052263 A1

### Non-patent literature cited in the description


- **BUSSE et al.** *J. Macromolecules,* 2000, vol. 33, 8775-8780
- **KRACHE et al.** *Macromolecues,* 2007, vol. 40, 6871-6878
- **A. ENDERS ; G. MAAS.** *Chemie in unserer Zeit,* 2000, vol. 34 (6
- **PIERANDREA LO NOSTRO.** Advances in Colloid and Interface Science. Elsevier Science, 1995, vol. 56, 245-287
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromolecules,* 1997, vol. 30, 6251
- **ZHOU, Z. ; KUEMMERLE, R. ; QIU, X. ; REDWINE, D. ; CONG, R. ; TAHA, A. ; BAUGH, D ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* vol. 28, 11289
- **BUSICO, V. ; CIPULLO, R. ; MONACO, G. ; VACATELLO, M. ; SEGRE, A.L.** *Macromoleucles,* 1997, vol. 30, 6251
- **RESCONI, L. ; CAVALLO, L. ; FAIT, A. ; PIEMONTESI, F.** *Chem. Rev.,* 2000, vol. 100, 1253
- ISO 16152. 01 July 2005
- **CHALLA G ; HERMANS PH ; WEIDINGER A.** *Makromol. Chem.,* 1962, vol. 56, 169
- **TURNER-JONES A ; AIZLEWOOD JM ; BECKETT DR.** *Makromol. Chem.,* 1974, vol. 75, 134
- **PAE KD.** *J. Polym. Sci.,* 1968, vol. 6, 657
- **OBADAL M ; CERMAK R ; STOKLASA K.** *Macromol. Rapid Commun.,* 2005, vol. 26, 1253
- **RIEGER ; SCHÖBEL.** *Chemistry-A European Journal,* 02 April 2012, vol. 18 (14), 4174-4178